# EUROPÄISCHE PATENTANMELDUNG

(11) **EP 1 369 838 A1**
(43) Veröffentlichungstag der Anmeldung: **10.12.2003**
(21) Anmeldenummer: 03012589.2
(22) Anmeldetag: 03.06.2003
(51) Int. Cl.: G08C 17/02, G08C 23/02

(54) **Funkschnittstelle zwischen Fahrzeug und Anhänger**

(30) Priorität: 06.06.2002 DE 10225160
(71) Anmelder: Wagner, Guido, 33758 Schloss Holte (DE)
(72) Erfinder: Wagner, Guido, 33758 Schloss Holte (DE)
(74) Vertreter: Schrooten, Rolf, Dipl.-Ing.

(57) **Zusammenfassung**

System aufweisend ein Fahrzeug 1 und einen an das Fahrzeug ankoppelbaren Anhänger 2, wobei eine trennbare Leitung vorgesehen ist, die eine Kommunikation zwischen Fahrzeug 1 und Anhänger 2 ermöglicht, wobei die Verbindung eine Funkverbindung ist, die eine Datenübertragung vermittels elektromagnetischer Wellen oder Ultraschall ermöglicht, wobei Sendemittel 3 vorgesehen sind, die sich im Anhänger 2 und/oder im Fahrzeug 1 befinden, wobei Empfangsmittel 5 vorgesehen sind, die sich im Fahrzeug 1 und/oder Anhänger 2 befinden, wobei die Mittel eine Fahrzeugschnittstelle und eine Anhängerschnittstelle bilden und wobei zwischen den Schnittstellen ein Austausch von Parametern, insbesondere von Steuersignalen und Zustandsdaten, stattfindet.

## Beschreibung

Die vorliegende Erfindung betrifft ein System aufweisend ein Fahrzeug und einen an das Fahrzeug ankoppelbaren Anhänger, wobei eine trennbare Leitung vorgesehen ist, die eine Kommunikation zwischen Fahrzeug und Anhänger ermöglicht.

Derartige Leitung werden bekanntermaßen von elektrischen, hydraulischen oder pneumatischen Verbindungen gebildet, die zwischen Fahrzeug und Anhänger hergestellt werden. Über diese Leitungen werden Verbraucher im Anhänger gespeist oder Signalgeber gesteuert. Die Leitungen werden über standardisierte Stecker verbunden, wobei die elektrische Verbindung zwischen einem PKW und dem Anhänger meist vermittels einer standardisierten 7 oder 13 poligen Steckverbindung hergestellt wird, wobei Male- und Female Stecker jeweils den Abschluss eines entsprechenden zuführenden Kabels bilden. Über diese Verbindung werden insbesondere die Beleuchtung des Anhängers gesteuert und gespeist und der Zustand der Beleuchtung kontrolliert. Sollten zusätzliche Funktionen erforderlich sein, so verwendet der Kraftfahrzeughersteller weitere Steckverbinder und Kabel.

Die bekannten Verbindungen haben einige Nachteile: Soll beispielsweise beim Anhänger nachträglich ein Verbraucher, Signalgeber oder Sensor eingebaut werden, so muss ein zusätzliches Kabel vom Fahrzeug zum Anhänger verlegt werden. Das führt zu technischen Problemen, da bei einem herkömmlichen Fahrzeugen keine zusätzlichen Steuerleitungen und Steckverbinder vorgesehen sind. Soll beispielsweise eine schaltbare Innenraumbeleuchtung im Anhänger angebracht werden, müsste dazu von der Beleuchtung ein Kabel bis zur Anhängerkupplung gelegt werden und ein zusätzlicher Steckverbinder mit einem weiteren Kabel zur Konsole des Fahrers und dort an einen Schalter montiert werden. Im Fahrzeug müssen Löcher gebohrt und Befestigungen für Kabel und Stecker geschaffen werden. Insbesondere wegen der Garantiebestimmungen, der TÜV-Tauglichkeit und wegen nicht lösbarer Montageteilen ist das nicht bei jedem Fahrzeug möglich.

Ein weiterer Nachteil ist, dass alle bekannten Steckverbinder einer gewissen Korrosion, da sie der Witterung ausgesetzt sind. Somit sind die Steckverbinder störanfällig und pflegeaufwändig. Bei einer schlechten Kontaktierung ist mitunter eine Verbindung komplett unterbrochen oder mit einem Wackelkontakt belastet. Zudem ist es schwierig, analoge Werte von Sensoren auf dem Kabelweg zu übertragen, da es auf den Leitungen schnell zu Störungen und Spannungsabfällen kommt. Vor allem sind die Kabel insbesondere im Bereich zwischen Fahrzeug und Anhänger anfällig für mechanische Beschädigungen.

Aufgabe der vorliegenden Erfindung ist es nunmehr, ein derartiges System mit einer Leitung zwischen Fahrzeug und Anhänger zu schaffen, das sich flexibel an neue Anforderungen anpassen lässt, das sich mit einfachen Mitteln kostengünstig umsetzen lässt und das resistent gegen äußere Beeinträchtigungen ist.

Diese Aufgabe wird durch das System mit den kennzeichnenden Merkmalen des Anspruch 1 gelöst.

Der erfindungsgemäße Grundgedanke liegt darin, die elektrische, hydraulische oder pneumatische Verbindung mit ihrer massiven Leitung zu ersetzen durch eine Funkverbindung, insbesondere eine Nahfunkverbindung, die vermittels elektromagnetischer Wellen oder vermittels Ultraschall kommuniziert. Bei dieser Funkverbindung sind Sendemittel, die sich im Anhänger und/oder im Fahrzeug befinden, und Empfangsmittel, die sich entsprechend im Fahrzeug und/oder im Anhänger befinden, vorgesehen. Die Mittel bilden eine Fahrzeugschnittstelle und eine Anhängerschnittstelle, wobei zwischen den Schnittstellen ein Austausch von Parametern, insbesondere von Steuersignalen und Zustandsdaten, stattfindet. An dieser Stelle sei erwähnt, dass unter den Begriff "Anhänger" gleichfalls an das Fahrzeug angebrachte Halter, wie insbesondere Fahrradhalter, fallen

Die Vorteile dieser Erfindung liegen auf der Hand: Zunächst lässt sich die erfindungsgemäße Verbindung mit einfachen Mitteln kostengünstig realisieren, da entsprechende Bauelemente heutzutage preiswert zu haben sind. Die Verbindung ist flexibel und robust. Generell ist eine solche Art der Datenleitung aus vielen Bereichen der Technik bekannt. Dabei lassen sich per Funk sowohl analoge als auch digitale Daten, Steuerbefehle, Befehlsantworten und ähnliches übertragen. Für verschiedene Anwendungsgebiete werden vorteilhafterweise verschiedene definierte Funkfrequenzen und Übertragungsnormen vorgesehen. Mit der Erfindung lassen sich einfache Zustände (An/Aus) oder komplexe Datenpakete auf freigegebenen Frequenzbändern einfach übertragen. Vorteilhaft ist vor allem auch, dass sich einzelne Systeme, wie beispielsweise eine Park Distance Control für den Anhänger bei schon vorhandener Kabelverbindung einfach nachrüsten lassen. Die Erfindung ist aber keineswegs auf Nachrüstsysteme beschränkt, sondern kann die herkömmliche Kabelverbindung vollständig ersetzen.

Da keine Steckverbinder zwischen KFZ und Anhänger vorhanden sind, kann auch keine Korrosion an den Kontakten auftreten. Zudem sind die für das System benötigten Bauteile, wie Verbraucher, Signalgeber oder Sensoren örtlich flexibel, wenn sie über Funk kommunizieren. Sie können überall dort angebracht werden, wo eine Spannungsversorgung vorhanden ist. Die Komponenten können mit jeweils separaten Batterien betrieben werden und sind dadurch verkabelungsfrei und vollständig autark. Außerdem kann in diesem System ein Verbraucher, Signalgeber oder Sensor bequem und schnell von einem KFZ oder Anhänger in einen anderen montiert werden.

Um eine möglichst umfangreiche und vor allem beidseitige Datenübertragung zu gewährleisten, ist es vorteilhaft, wenn beide Schnittstellen und damit sowohl das Fahrzeug als auch der Anhänger jeweils eine Sende-Empfangseinheit aufweisen. Schon aus Gründen der Sicherheit und der Praktikabilität ist es vorteilhaft, wenn zwischen den Schnittstellen eine Nahfunkverbindung besteht. Diese benötigt lediglich eine geringe Sendeleistung und kann miniaturisiert hergestellt werden. Wegen der kommerziell erhältlichen Bauteile und der unterstützenden Software ist es vorteilhaft, sich eines bekannten Standards, insbesondere des Blue-Tooth Standards, zu bedienen.

Die höchste Flexibilität wird erreicht, wenn jeder der Schnittstellen ein eigener programmierbarer Mikroprozessor zugeordnet ist, der die Datenübertragung organisiert. Auf die Mikroprozessoren kann dann in bekannter Weise ein Programm geladen werden, wobei der Zugang dem Nutzer selber oder dem Fachmann ermöglicht werden kann. Dabei ist es besonders vorteilhaft, wenn die Mikroprozessoren derart programmiert sind, dass sich die Schnittstellen bei einer Annährung von Fahrzeug und Anhänger innerhalb des Sende-Empfangsbereiches automatisch erkennen und initialisieren. Dabei sollte der Initialisierungsvorgang eine Erkennung aller zum Austausch vorgesehenen Parameter umfasst. Die Programmierung kann derart sein, dass sich die Schnittstellen-Endgeräte anhand einer jeweils ausgestrahlten Kennung entdecken, sobald sie sich innerhalb eines gemeinsamen Sende- und Empfangsradius begegnen. Die Verbindung wird aktiviert, sobald sich die Endgeräte verifiziert und ihre Einwilligung erteilt haben.

Bei einer weiteren vorteilhaften Ausführungsform ist die Anhängerschnittstelle verbunden mit Sensoren, die Betriebsgrößen des Anhängers ermitteln. Dazu zählen insbesondere Sensoren für eine Park-Distance Control, die an der Rückseite des Anhängers angebracht sein können. Andere Sensoren können als Betriebsgrößen den Reifendruck, die Reifentemperatur, die Innenraumtemperatur, den Zustand des Fahrwerkes und/oder einen Füllzustand im Anhänger messen. Alle gemessenen Betriebsgrößen können zum Fahrzeug übermittelt und dem Fahrer in beliebiger Weise optisch oder akustisch dargeboten oder durch ein System im Fahrzeug verarbeitet werden.

Es ist auch möglich, die Anhängerschnittstelle mit Aktoren zu verbinden, die vom Fahrzeug gesendete Betriebsgrößen in Aktionen umsetzen. Im einfachsten Fall sind dies Schalter beispielsweise für eine Beleuchtung in oder am Anhänger. Auch die Steuerung oder Regelung von Fahrthilfen und/oder der Bremsanlage am Anhänger ist möglich.

In Richtung zum Fahrzeug können Befehle zur Geschwindigkeitsbegrenzung oder zu Stoßdämpfern zum Zwecke der Fahrthilfe gegeben werden. Außerdem können Navigationsdaten zur Speicherung im Anhänger zum Zwecke Fahrtüberwachung oder Daten zur Diebstahlsicherung sowie Kennungen, wie Seriennummern, vom KFZ zum Anhänger oder umgekehrt übertragen werden. Auch die Übertragung besonders komplexer Datenstrukturen, wie Musik und Sprache auch im Falle einer Audio- oder Videoüberwachung ist möglich.

Um eine ungestörte Funkverbindung gewährleisten zu können, ist es vorteilhaft, Mittel vorzusehen, die eine Abschirmung der Verbindung gegen äußere Störfelder bewerkstelligen. Diese Mittel können Abschirmbleche aufweisen. Vorteilhaft ist es aber Richtantennen einzusetzen, die auf den zugeordneten Sender am Fahrzeug oder am Anhänger gerichtet sind. Weiterhin ist es vorteilhaft, wenn die Verbindung zyklisch auf das Vorhandensein einer unbeabsichtigten Unterbrechung oder Störung geprüft wird, indem beispielsweise Kontrolldaten ausgetauscht werden. Um die Datensicherheit zu erhöhen oder um einen Verbund von Fahrzeug und Anhänger zu individualisieren ist es vorteilhaft, wenn die Daten verschlüsselt übertragen werden.

Da über die Funkverbindung nur bedingt eine Übertragung von Leistung möglich ist, ist es vorteilhaft, wenn am Anhänger ein Mittel, insbesondere eine Batterie oder ein Kompressor, vorhanden ist, dem Leistung zum Betrieb von Aktoren und Energieverbrauchern, wie Beleuchtungsmitteln oder Motoren, entnehmbar ist. Somit benötigt die Funkverbindung vom Fahrzeug zum Anhänger lediglich die im Fahrzeug und Anhänger vorhandene Stromversorgung. Es müssen keine zusätzlichen Steckverbinder und Kabel gelegt werden.

Ausführungsbeispiele der Erfindung sind in den Figuren dargestellt und werden nachfolgend näher beschrieben. Es zeigen
- **Figur 1**: das System mit Sender im KFZ und Empfänger im Anhänger und
- **Figur 2**: das System mit Empfänger im KFZ und Sender im Anhänger

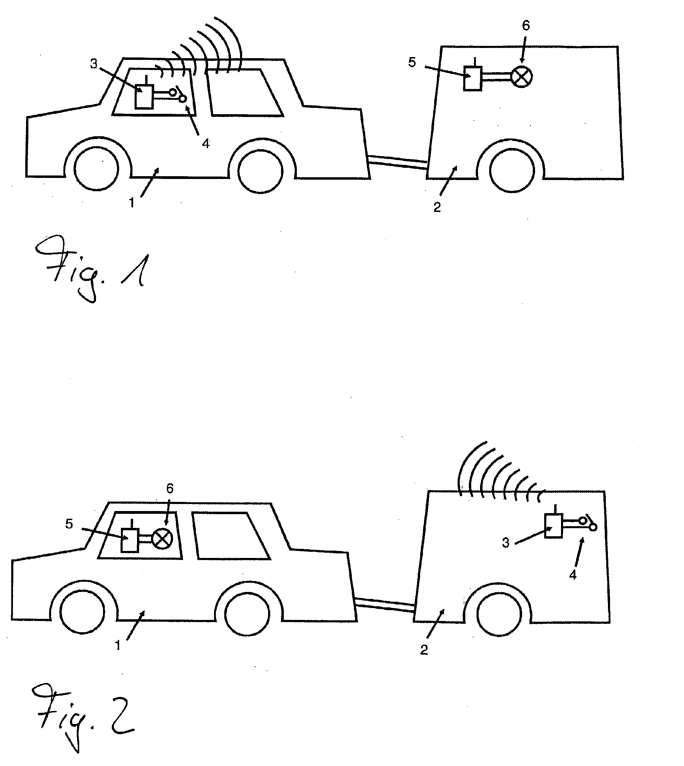

Nach Figur 1 befindet sich im KFZ 1 ein Sender 3, der per Schalter 4 zu bedienen ist. Im Anhänger 2 wird ein Empfänger 5 angebracht, der eine Glühbirne 6 ein und ausschalten kann. Der Sender 3 sendet den Zustand des Schalters 4 in Form elektromagnetischer Funkwellen aus. Der Empfänger 5 empfängt das Signal und schaltet entsprechend eine Glühbirne 6 ein/aus. Somit kann der Fahrer im KFZ 1 das Licht im Anhänger 2 fernbedienen. Der Strom zum Betrieb des Empfängers 5, des Schalters im Anhänger und der Glühbirne 6 wird einer Batterie im Anhänger entnommen.

Nach Figur 2 ist im KFZ 1 ein Empfänger 5 angebracht, der eine Warnlampe 6 einund ausschalten kann. Im Anhänger 2 befindet sich ein Sender 5 angebracht, der Daten von einem Sensor 4a empfängt. Der Sender 3 sendet den Zustand des Sensors 4a in Form elektromagnetischer Funkwellen aus. Der Empfänger 5 empfängt das Signal und schaltet entsprechend eine Anzeige 6 ein oder aus. Der Fahrer des KFZ 1 kann somit anhand der Anzeige 6 einen Zustand im Anhänger 2 abfragen.

## Patentansprüche

1. System aufweisend ein Fahrzeug (1) und einen an das Fahrzeug ankoppelbaren Anhänger (2), wobei eine trennbare Leitung vorgesehen ist, die eine Kommunikation zwischen Fahrzeug (1) und Anhänger (2) ermöglicht,
**dadurch gekennzeichnet,**
**dass** die Verbindung eine Funkverbindung ist, die eine Datenübertragung vermittels elektromagnetischer Wellen oder Ultraschall ermöglicht, wobei Sendemittel (3) vorgesehen sind, die sich im Anhänger (2) und/oder im Fahrzeug (1) befinden, wobei Empfangsmittel (5) vorgesehen sind, die sich im Fahrzeug (1) und/oder Anhänger (2) befinden, wobei die Mittel eine Fahrzeugschnittstelle und eine Anhängerschnittstelle bilden und wobei zwischen den Schnittstellen ein Austausch von Parametern, insbesondere von Steuersignalen und Zustandsdaten, stattfindet.

2. System nach Anspruch 1,
**dadurch gekennzeichnet,**
**dass** beide Schnittstellen jeweils eine Sende-Empfangseinheit aufweisen.

3. System nach Anspruch 1 oder 2,
**dadurch gekennzeichnet,**
**dass** zwischen den Schnittstellen eine Nahfunkverbindung, insbesondere eine Blue-Tooth Verbindung, besteht.

4. System nach einem der vorherigen Ansprüche,
**dadurch gekennzeichnet,**
**dass** jeder der Schnittstellen ein programmierbarer Mikroprozessor zur Organisation der Datenübertragung zugeordnet ist.

5. System nach Anspruch 4,
**dadurch gekennzeichnet,**
**dass** die Mikroprozessoren derart programmiert sind, dass sich die Schnittstellen bei einer Annährung von Fahrzeug und Anhänger innerhalb des Sende-Empfangsbereiches automatisch erkennen und initialisieren, wobei die Initialisierung eine Erkennung aller zum Austausch vorgesehenen Parameter umfasst.

6. System nach einem der vorherigen Ansprüche,
**dadurch gekennzeichnet,**
**dass** die Anhängerschnittstelle verbunden ist mit Sensoren, die Betriebsgrößen des Anhängers ermitteln, insbesondere für eine Park-Distance Control, für den Reifendruck oder die Reifentemperatur, für die Innenraumtemperatur, für den Zustand des Fahrwerkes und/oder für einen Füllzustand, wobei diese Betriebsgrößen dem Fahrzeug übermittelt und dem Fahrer dargeboten werden.

7. System nach einem der vorherigen Ansprüche,
**dadurch gekennzeichnet,**
**dass** die Anhängerschnittstelle verbunden ist mit Aktoren, die vom Fahrzeug gesendete Betriebsgrößen umsetzen, insbesondere mit Schaltern für eine Beleuchtung in oder am Anhänger, für eine Steuerung von Fahrthilfen und/oder für eine Bremsanlage am Anhänger.

8. System nach einem der vorherigen Ansprüche,
**dadurch gekennzeichnet,**
**dass** Mittel vorgesehen sind, die eine Abschirmung der Verbindung gegen äußere Störfelder bewerkstelligt, wobei diese Mittel insbesondere eine Richtantenne aufweisen, die auf den zugeordneten Sender gerichtet ist.

9. Anhänger mit Anhängerschnittstelle zur Nahfunkübertragung als Teil des Systems nach einem der vorherigen Ansprüche,
**gekennzeichnet durch**
ein Mittel, insbesondere eine Batterie, einen Generator oder einen Kompressor, dem Leistung zum Betrieb von Aktoren und
Energieverbrauchern, wie Beleuchtungsmitteln oder Motoren, entnehmbar ist.

10. Verfahren zur Kommunikation zwischen einem Fahrzeug und einem am Fahrzeug angekoppelten Anhänger via einer trennbaren Verbindung,
**dadurch gekennzeichnet,**
**dass** Daten vermittels elektromagnetischer Wellen oder Ultraschall übertragen werden, wobei die Daten von einer Sendeeinheit, die sich im Anhänger und/oder im Fahrzeug befindet, zu einer Empfängereinheit, die sich im Fahrzeug und/oder Anhänger befindet gesendet werden.

11. Verfahren nach Anspruch 10,
**dadurch gekennzeichnet,**
**dass** die Verbindung zyklisch auf das Vorhandensein einer unbeabsichtigten Unterbrechung geprüft wird.

12. Verfahren nach Anspruch 10 oder 11
**dadurch gekennzeichnet,**
**dass** die Daten verschlüsselt übertragen werden.
